**Europäisches Patentamt**

**European Patent Office**

**Office européen des brevets**

(11) Numéro de publication : **0 170 618**
**B1**

## FASCICULE DE BREVET EUROPÉEN

(45) Date de publication du fascicule du brevet :
**02.03.88**

(51) Int. Cl.⁴ : **G 03 B 27/58, G 01 J 3/52**

(21) Numéro de dépôt : **85810308.8**

(22) Date de dépôt : **05.07.85**

(54) **Appareil pour reproduire au moins une surface colorée sur une émulsion photographique.**

(30) Priorité : **27.07.84 CH 3643/84**

(43) Date de publication de la demande :
**05.02.86 Bulletin 86/06**

(45) Mention de la délivrance du brevet :
**02.03.88 Bulletin 88/09**

(84) Etats contractants désignés :
**AT BE CH DE FR GB IT LI LU NL SE**

(56) Documents cités :
**EP-A- 0 116 011**
**FR-A- 1 544 670**
**US-A- 2 233 255**

(73) Titulaire : **Lamere, Jean-Claude**
**Villaret**
**CH-1411 Essertines/Yverdon (CH)**

(72) Inventeur : **Lamere, Jean-Claude**
**Villaret**
**CH-1411 Essertines/Yverdon (CH)**

(74) Mandataire : **Nithardt, Roland**
**CABINET ROLAND NITHARDT Rue Edouard Verdan 15**
**CH-1400 Yverdon-les-Bains (CH)**

Jouve, 18, rue St-Denis, 75001 Paris, France

## Description

La présente invention concerne un appareil pour reproduire au moins une surface colorée dont la couleur correspond à une référence sélectionnée sur un nuancier, cette surface étant obtenue par synthèse contrôlée de couleurs sur une émulsion photographique donnée, comportant une unité d'exposition équipée de trois sources lumineuses correspondant à trois couleurs primaires, un sensitomètre équipé d'un plateau portant un substrat revêtu de l'émulsion photographique, d'un masque pour masquer cette émulsion et d'un mécanisme pour déplacer le masque relativement à cette émulsion, et une unité centrale de commande équipée d'un clavier de sélection des références du nuancier, d'organes de calcul de la durée de chacune des expositions à une des trois sources lumineuses, d'organes de commande de l'unité d'exposition et d'organes de commande du mécanisme de déplacement du masque.

Un tel dispositif a été décrit dans sa forme générale dans la demande de brevet suisse No. 109/83-4 datant du 10.1.83 et correspondant à la publication EP-A-116011 du 15.8.84. Toutefois, ce dispositif a fait l'objet de nombreux perfectionnements pratiques rendant son utilisation plus facile et plus sûre, et sa construction plus compacte et moins coûteuse. Dans ce but, l'appareil pour reproduire au moins une surface colorée selon l'invention est caractérisé en ce que le plateau du sensitomètre est rotatif et comporte un dispositif de succion pour maintenir le substrat revêtu de l'émulsion photographique sur ce plateau, en ce que le masque comporte un cache mobile selon une direction, pourvu d'une fenêtre d'exposition allongée, sensiblement perpendiculaire à cette direction, et dont la longueur est telle qu'au cours du déplacement du cache, la fenêtre puisse balayer entièrement l'émulsion photographique, et un obturateur mobile selon une direction parallèle à la direction de déplacement du cache, susceptible d'obturer la fenêtre d'exposition, et en ce que l'unité d'exposition comporte une boîte à filtres comportant trois filtres correspondant aux trois couleurs primaires, ces trois filtres étant mobiles en translation, et un mécanisme susceptible de les interposer successivement entre une source de lumière et la fenêtre d'exposition du masque.

La présente invention, ainsi que ses principales caractéristiques et ses avantages, seront mieux compris en référence à la description d'un exemple de réalisation préféré et du dessin annexé, dans lequel :

La figure 1 représente une vue schématique en perspective de l'appareil selon l'invention,

La figure 2 représente une vue de dessous du sensitomètre,

La figure 3 représente une vue en plan du masque du sensitomètre,

La figure 4 est une vue en coupe transversale, le long de la ligne A-A de la fig. 3, illustrant le masque et en partie le mécanisme permettant son déplacement transversal sur le plateau du sensitomètre,

La figure 5 est une vue en plan illustrant le mécanisme d'entraînement du cache et de l'obturateur mobiles constituant le masque du sensitomètre,

La figure 6 est une vue en coupe axiale illustrant essentiellement le dispositif de succion associé au plateau du sensitomètre, et

La figure 7 est une vue de dessous de la boîte à filtres associée à la source de lumière.

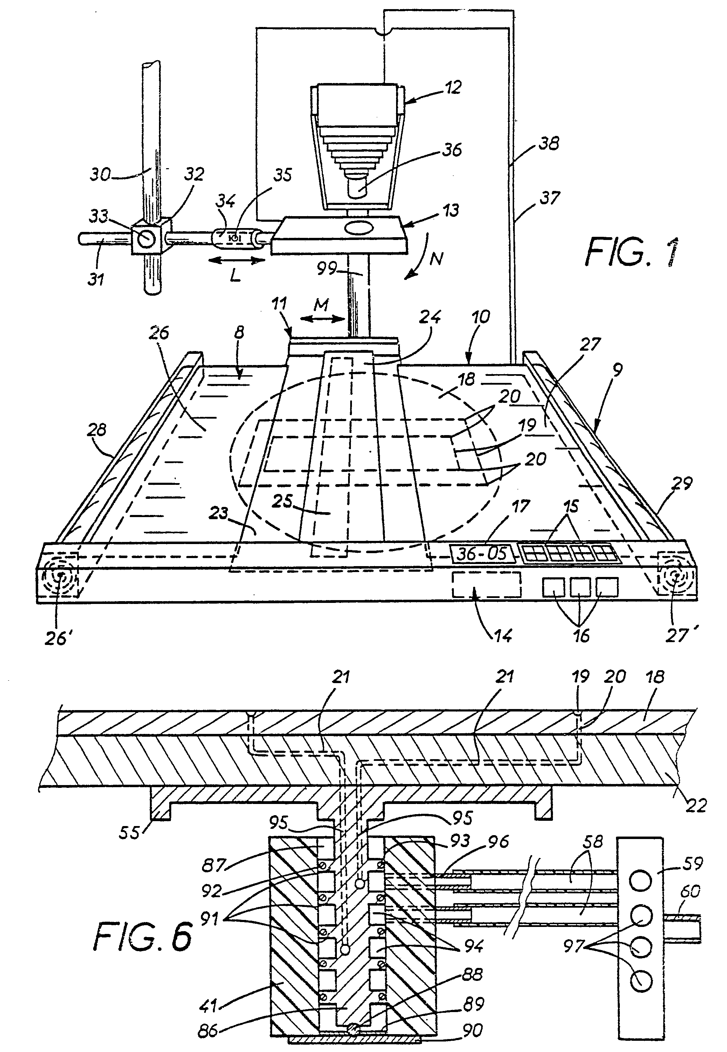

En référence à la fig. 1, l'appareil décrit se compose essentiellement d'un sensitomètre 10, d'un masque 11 mobile transversalement par rapport à la surface supérieure du sensitomètre, d'une unité d'exposition comprenant une source de lumière 12 et une boîte à filtres 13, et d'une unité centrale de commande 14 incorporée au châssis 9 du sensitomètre et équipée d'un clavier de sélection 15 des références du nuancier, d'une série 16 de touches de fonction et d'un écran d'affichage 17.

Le châssis 9 du sensitomètre 10 présente une forme sensiblement rectangulaire et supporte un plateau horizontal 8 pourvu d'une ouverture centrale circulaire, dans laquelle est montée une plaque circulaire rotative 18 conçue pour recevoir un substrat revêtu d'une émulsion photographique. La plaque 18 est pourvue à sa surface supérieure d'un réseau de gorges superficielles 19 disposées selon des tracés rectangulaires à côtés parallèles, qui correspondent sensiblement ou ont des dimensions de préférence légèrement inférieures à celles de différents formats de substrats à couche sensible pouvant être utilisés sur cet appareil. Chacune de ces gorges superficielles 19 communique avec un canal traversant 20 qui est relié, comme le montre plus en détail la fig. 6, à un conduit 21 ménagé à l'intérieur d'une plaque rectangulaire 22 associée à la plaque circulaire rotative 18, de telle manière qu'elle puisse tourner en même temps qu'elle.

Le masque 11 se compose d'un cache 23 mobile dans le sens de la double flèche M et d'un obturateur 24 mobile selon cette même direction, pour masquer partiellement ou totalement une fenêtre allongée 25 ménagée dans le cache 23, perpendiculaire à la direction M du déplacement du cache et de l'obturateur.

Deux volets 26 et 27, à mandrins enrouleurs automatiques 26', respectivement 27', sont fixés latéralement au cache 23 de manière de recouvrir les parties du plateau horizontal 8 non recouvertes par le cache 23, quelle que soit la position de ce cache. Les mandrins enrouleurs 26' et 27' sont respectivement logés dans deux montants latéraux 28 et 29 du châssis 9 du sensitomètre 10. Ces volets 26 et 27 sont de préférence fixés aux bords latéraux du cache 23 par un profil coudé ou en forme de crochet, qui permet un accouplement ou un décrochement rapide ne nécessitant aucun outillage.

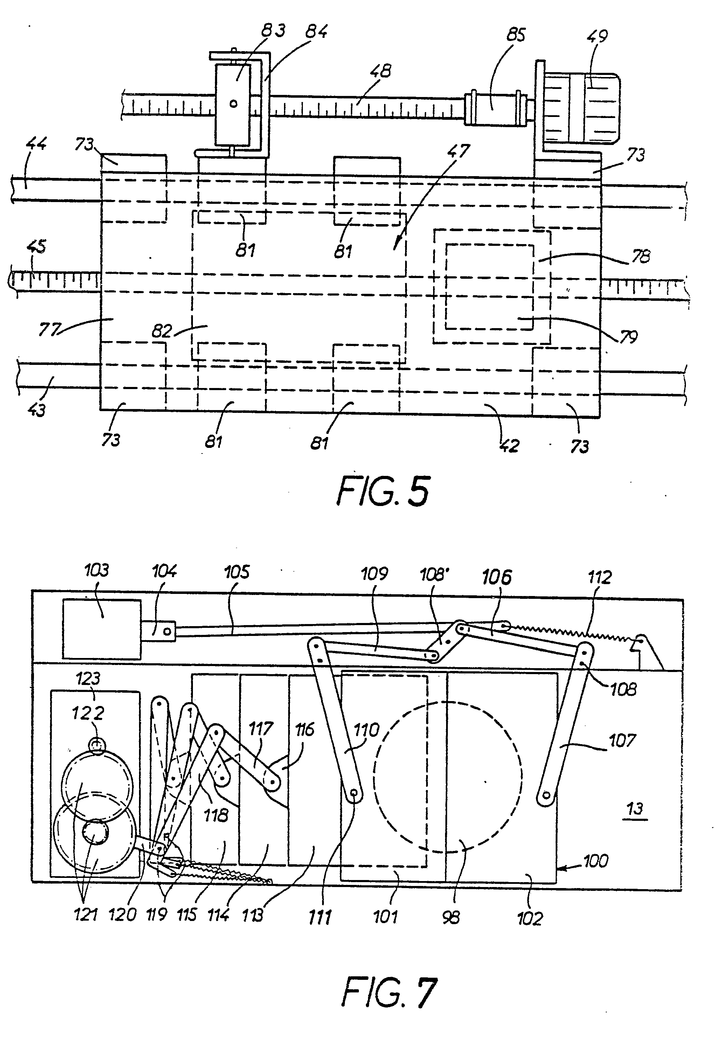

La boîte à filtres 13, qui sera décrite plus en détail en référence à la fig. 7, est montée sur un support composé d'une colonne verticale fixe 30 et d'une barre horizontale 31, liée à la colonne 30 par un cube de liaison 32 pourvu d'une vis de blocage 33 permettant un blocage en position en une seule opération du cube de liaison mobile le long de la colonne 30 et de la barre horizontale 31. Un manchon coulissant 34, mobile dans la direction de la double flèche L, permet de rabattre la boîte de filtres 13 vers le bas, dans le sens de la flèche N autour d'une articulation 35 reliant entre eux les deux tronçons constituant la barre horizontale 31. Ce système de fixation permet de retirer la boîte de filtres 13 du champ de la source de lumière 12 ou de régler la position de cette boîte de filtres par rapport à l'objectif 36 de cette source. Deux lignes 37 et 38, représentées schématiquement, illustrent la liaison entre l'unité centrale de commande 14 et la source de lumière 12 d'une part, et celle entre cette même unité centrale de commande et la boîte de filtres 13 d'autre part.

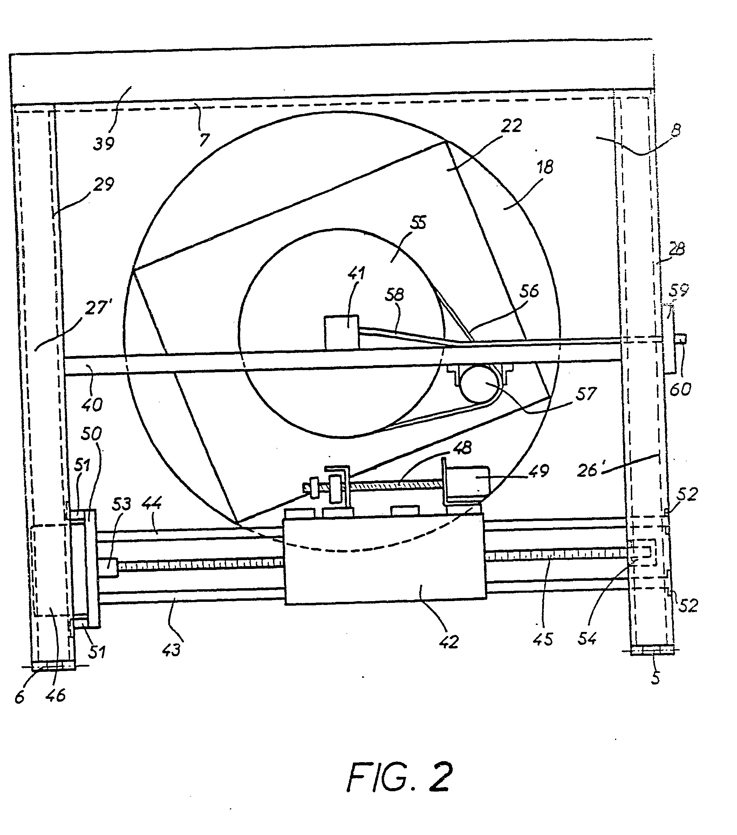

Comme le montre la fig. 2, le plateau 8 du sensitomètre, vu de dessous, est porté par les deux montants latéraux 28 et 29 du châssis, reliés à leur extrémité antérieure par un profil 39 dans lequel sont montés l'unité centrale de commande 14, le clavier de sélection 15, les touches de fonction 16 et l'écran d'affichage 17, et, dans leur partie centrale, par une traverse 40 qui porte un bloc de succion 41 servant de support à l'axe de la plaque circulaire rotative 18. A leur extrémité postérieure, les deux montants latéraux 28 et 29 sont reliés par le mécanisme destiné à permettre les déplacements indépendants, dans la direction de la double flèche M, du cache 23 et de l'obturateur 24. Ce mécanisme, illustré plus en détail par la fig. 5, se compose essentiellement d'un chariot 42 mobile en translation sur deux tiges de guidage 43 et 44 parallèles entre elles, sous l'effet de la rotation d'une vis 45 parallèle aux deux tiges de guidage 43 et 44 et entraînée par un moteur 46. Ce chariot 42 est lié au cache 23 et porte un coulisseau 47 également mobile en translation sur les deux tiges de guidage 43 et 44 sous l'effet de la rotation d'une vis 48 entraînée par un moteur 49 monté sur le chariot 42.

Les deux tiges 43 et 44 sont fixées à une de leurs extrémités sur une plaque de montage 50, reliée par des organes de fixation 51 au montant 29 et portant également le moteur 46 qui entraîne la vis 45. Les autres extrémités des tiges de guidage 43 et 44 sont directement fixées, par des organes 52 appropriés tels que par exemple des écrous, au montant 28 du châssis 9 du sensitomètre. L'une des extrémités de la vis 45 est rendue solidaire de l'arbre de sortie 53 du moteur 46, tandis que l'autre extrémité de cette vis est portée par un palier 54 fixé au montant 28.

Comme le montre également la fig. 2, la plaque rectangulaire 22, fixée à la surface inférieure de la plaque circulaire rotative 18, est liée à une roue d'entraînement 55 couplée par une courroie, de préférence crantée 56, à une roue d'entraînement d'un moteur 57 porté par la traverse 40.

Le bloc de succion 41, qui sera décrit plus en détail en référence à la fig. 6, est connecté par des tubulures 58 à un bloc de vannes 59, dont l'embout 60 est destiné à être raccordé à une pompe à vide (non représentée).

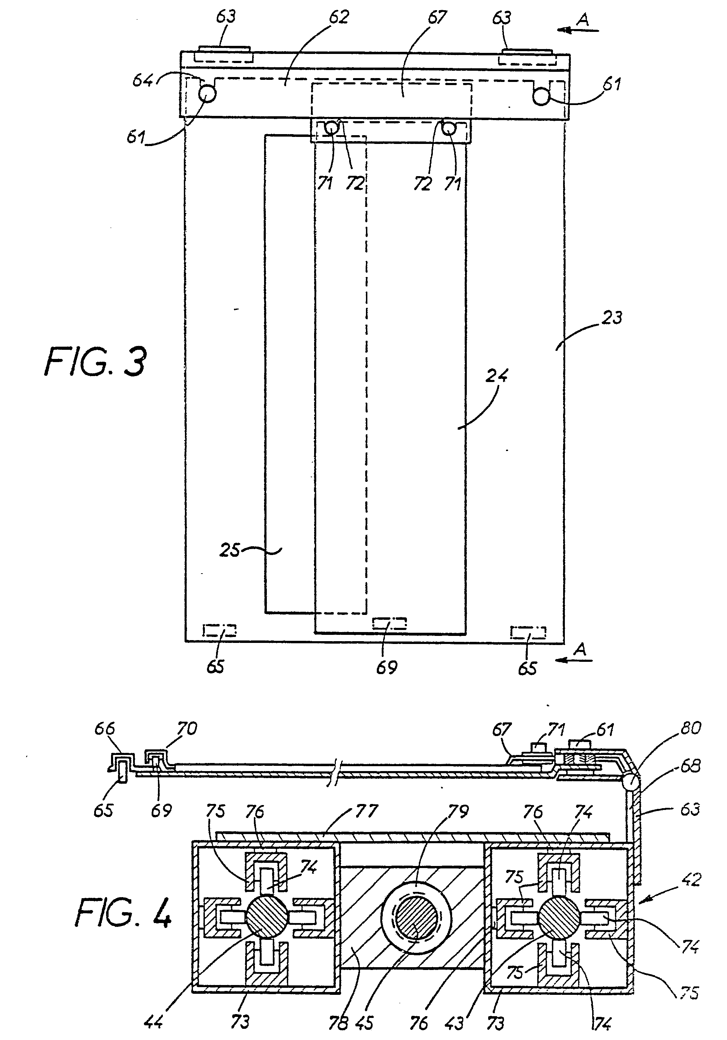

La fig. 3 montre, vu de dessus, le masque du sensitomètre. Comme mentionné précédemment, ce masque comporte le cache 23 pourvu de la fenêtre allongée 25 et l'obturateur 24, dont les dimensions sont telles qu'il puisse obturer partiellement ou totalement la fenêtre 25. Le masque 11 se compose d'une plaque sensiblement rectangulaire, vissée par des vis 61 à un support 62 relié par des brides 63 au chariot 42 représenté schématiquement par la fig. 2 et décrit plus en détail en référence à la fig. 4. Les vis 61 sont destinées à permettre un assemblage rapide du cache et de son support 62 grâce à la présence d'entailles 64 ménagées le long du bord supérieur de la plaque rectangulaire constituant le cache. Deux galets 65, partiellement noyés dans un profil 66 en forme de U, servent d'appui au cache 23 contre la surface supérieure d'un longeron 7 reliant entre eux les mandrins enrouleurs 26', 27' liés aux montants 28, 29 par des charnières 5 et 6 (fig. 2).

L'obturateur 24 se compose également d'une plaque sensiblement rectangulaire, dont la largeur est supérieure à celle de la fenêtre 25. Cette plaque est portée par un support 67 relié au moyen de brides 68 au coulisseau 47 (voir fig. 5). A son extrémité antérieure, la plaque de l'obturateur 24 est également équipée d'un galet 69, partiellement noyé sous un profil 70 en forme de U, et qui permet à cet obturateur de se déplacer à faible friction sur la surface supérieure du cache 23. La plaque de l'obturateur 24 est liée à son support 67 par des vis 71 qui s'engagent dans des encoches 72 ménagées le long du côté supérieur de la plaque de l'obturateur.

La fig. 4 illustre plus particulièrement la structure du chariot mobile 42. Celui-ci se compose essentiellement de quatre éléments 73 constitués par des tronçons de profil à section carrée, dans lesquels sont montés quatre galets d'appui 74 respectivement portés par des segments de profil 75 en forme de U, ces segments de profil étant fixés chacun sur la surface intérieure d'un des côtés des éléments 73. De cette manière, les galets 74 ont chacun un seul point d'appui avec la tige de guidage correspondante 43 ou 44 et les frictions, exercées lors du déplacement du chariot 42, sont réduites au minimum. Pour que l'appui des galets sur les tiges de guidage soit constant, deux des segments de profil 75 adjacents sont montés rigidement contre le côté correspondant de l'élément 73, alors que deux autres segments de profil 75 sont reliés à la paroi intérieure correspondante par l'intermédiaire de lames ressorts 76. Les quatre éléments 73 sont reliés par une plaque rectangulaire 77. Un bloc 78, monté par exemple entre deux éléments 73 voisins, sert de support à un écrou fileté 79 engagé sur la vis 45 entraînée par le moteur 46.

Pour permettre un accès facile au plateau circulaire rotatif 18, le support 62 du cache 23, ainsi que le support 67 de l'obturateur 24, sont reliés à leurs brides respectives 63 et 68 au moyen de charnières 80.

La fig. 5 illustre d'une manière plus détaillée l'agencement relatif du chariot 42 et du coulisseau 47. Le coulisseau 47 comporte, dans l'exemple de réalisation représenté, également quatre éléments 81 qui sont sensiblement similaires aux éléments 73 supportant la plaque 77 du chariot. Ces quatre éléments sont reliés et maintenus en position par une plaque 82 de forme rectangulaire ou carrée. Les quatre éléments 81 pourraient être remplacés par deux éléments comportant chacun deux séries de quatre galets, dont le rôle est identique à celui des quatre galets contenus dans chacun des éléments 81. Le coulisseau se déplace sur les deux tiges de guidage 43 et 44, et l'amplitude de son mouvement est limitée par l'écartement de deux éléments 73 d'une même tige de guidage. Le déplacement du coulisseau 47 s'effectue grâce au moteur 49 qui entraîne une vis ou tige filetée 48 et agit sur un écrou 83 monté en cardan sur une équerre 84. La liaison entre l'arbre de sortie du moteur 49 et la vis 48 s'effectue au moyen d'un manchon souple 85.

Etant donné que le moteur 46 responsable du déplacement du chariot 42 et le moteur 49 responsable du déplacement du coulisseau 47 sont commandés individuellement et indépendamment par l'unité centrale de commande 14 et que le chariot 42 est lié au cache 23, le coulisseau 47 étant lié à l'obturateur 24, ces deux éléments peuvent être déplacés indépendamment l'un de l'autre pour permettre un réglage précis de l'ouverture de la fenêtre 25, et de son positionnement.

La fig. 6 illustre essentiellement le bloc de succion 41 qui permet de maintenir en position un substrat revêtu d'une émulsion sensible contre la surface supérieure de la plaque circulaire rotative 18 du sensitomètre. L'axe 86 de la roue 55 est logé dans un alésage cylindrique 87 du bloc 41 et repose sur une bille 88 retenue par une rondelle 89 et une plaquette circulaire de fermeture 90. L'axe lui-même est pourvu d'un certain nombre de nervures 91 parallèles entre elles et comportant chacune à son extrémité une gorge circulaire 92, dans laquelle est logé un joint torique 93 assurant l'étanchéité entre les cavités 94 ménagées entre les nervures 91. Le noyau central plein de l'axe 86 comporte plusieurs canules 95 traversant le moyeu de la roue 55 et communiquant respectivement avec les conduits intérieurs 21 ménagés à l'intérieur de la plaque rectangulaire 22 pour communiquer avec les canaux 20 traversant la plaque circulaire 18 et débouchant au fond des gorges superficielles 19. Chacune des cavités circulaires 94 communique avec un embout 96 relié au moyen d'une tubulure 58 au bloc de vannes 59 commandées individuellement par des taquets mobiles 97, destinés à mettre en communication une ou plusieurs des tubulures 58 avec une pompe à vide (non représentée).

Ce dispositif permet d'assurer d'une manière particulièrement simple et efficace la mise en place précise du substrat à émulsion sensible disposé sur le plateau du sensitomètre.

La boîte à filtres, représentée par la fig. 7, présente l'avantage d'avoir un encombrement particulièrement réduit, en tout cas bien inférieur à celui des filtres montés sur des supports rotatifs du type carrousel. La boîte 13 proprement dite présente une forme de parallélépipède rectangle, dont les faces supérieure et inférieure sont percées chacune d'une ouverture circulaire 98 permettant le passage de la lumière émise par une source de lumière 12 et concentrée par un objectif 36. Cette source de lumière 12 et l'objectif 36 sont de préférence constitués par un agrandisseur photographique du type professionnel monté sur une colonne 99. Les deux ouvertures 98 peuvent être obturées par un obturateur 100 comportant deux volets 101 et 102, dont l'ouverture et la fermeture sont commandées par un électro-aimant 103. La tige 104 solidaire du noyau plongeur de l'électro-aimant est reliée à une biellette 105, liée d'une part à une tige 106 qui commande un bras 107 pivotant autour d'un axe 108 et fixé au volet 102 et, d'autre part, à une bascule de renvoi 108' reliée à une tige 109 articulée à un bras 110, pivotant autour d'un axe 111 et relié au volet 101 de l'obturateur 100. Un ressort de rappel 112 est fixé à la biellette 105. Ce mécanisme permet d'ouvrir et de fermer rapidement les deux volets 101 et 102 de l'obturateur 100.

Les filtres 113, 114 et 115 sont constitués par des plaques filtrantes planes, pouvant être déplacées transversalement de manière à être interposées entre les deux ouvertures 98 des deux grandes faces parallèles de la boîte 13. Chaque filtre comporte une bride de fixation 116, à laquelle est fixée une biellette 117 articulée sur un bras 118 pivotant autour d'un axe 119 et attaché à une tige 120 solidaire d'une came (non représentée) entraînée par un train d'engrenages 121 mis en mouvement par le pignon de sortie 122 d'un moteur d'entraînement logé dans un boîtier 123. Le déplacement des filtres 113, 114 et 115, ainsi que l'ouverture ou la fermeture de l'obturateur 100, sont commandés par l'unité de commande centrale 14.

Les solutions constructives recherchées ont permis de réaliser un appareil efficace et fiable, relativement peu encombrant et permettant de résoudre les problèmes de reproduction de surfaces colorées par synthèse contrôlée de couleurs sur une émulsion photographique donnée. Le système permet notamment de reproduire des dégradés de couleurs entre deux références quelconques du nuancier. En particulier, pour reproduire une couleur donnée, on effectue une ou plusieurs expositions de l'émulsion photographique à une ou plusieurs couleurs primaires obtenues grâce aux filtres contenus dans la boîte à filtres en ouvrant, au cours d'une première phase, la fenêtre par déplacement de l'obturateur 24, le cache 23 étant immobile, en déplaçant simultanément et à la même vitesse le cache et l'obturateur au cours d'une seconde phase, de manière à maintenir constante l'ouverture de la fenêtre, puis en déplaçant, au cours d'une troisième phase, le cache en maintenant l'obturateur immobile de manière à fermer la fenêtre. De cette manière, on obtient une lumination constante et le résultat est la reproduction d'une couleur uniforme ou dégradé nul.

Un dégradé positif s'obtient en remplaçant la seconde phase de l'opération précédente par une phase au cours de laquelle l'obturateur et le cache se déplacent simultanément dans le même sens, mais de telle manière que la largeur de la fenêtre évolue de manière croissante. Ceci peut être réalisé de manière aisée grâce au fait que les moteurs 46 et 49 sont des moteurs pas-à-pas et reçoivent des impulsions de commande par l'unité de commande centrale 14. Pour réaliser un dégradé négatif, cette phase est remplacée par une phase au cours de laquelle le cache et l'obturateur avancent simultanément dans le même sens, mais de telle manière que l'ouverture de la fenêtre évolue en décroissant.

Grâce à l'existence d'un nuancier très complet comportant plusieurs centaines de références, il est possible de reproduire, par synthèse contrôlée des couleurs, toutes les nuances de couleurs souhaitables.

L'accès au plateau du sensitomètre peut être facilité par la réalisation d'un cadre pivotant, qui supporte les deux mandrins enrouleurs 26', 27' et qui comprend le longeron 7 qui relie deux extrémités correspondantes de ces mandrins entre elles, et par la présence d'un ressort de rappel (non représenté), par exemple logé dans les montants 28 et 29 du châssis 9, qui permettent de faire pivoter, pratiquement sans effort, l'ensemble d'obturation du sensitomètre comprenant le cache 23, l'obturateur 24 et les volets latéraux 26 et 27.

D'autres formes d'exécution peuvent bien entendu être imaginées. En particulier, la boîte 13 pourrait être équipée d'une tige support télescopique permettant son dégagement hors du champ de l'objectif 36 par déplacement axial dans le sens de la flèche L au lieu d'un pivotement selon la flèche N.

Par ailleurs, les gorges superficielles de la plaque circulaire rotative pourraient être remplacées par des trous d'aspiration répartis sur toute la surface selon des dispositions déterminées correspondant aux formats de substrats à revêtement sensible.

De même, le nombre de touches de fonction et l'agencement du clavier de sélection peuvent être modifiés en fonction des besoins ou des utilisations prévues.

**Revendications**

1. Appareil pour reproduire au moins une surface colorée sur une émulsion photographique dont la couleur correspond à une référence sélectionnée sur un nuancier, cette surface étant obtenue par synthèse contrôlée de couleurs sur une émulsion photographique donnée, comportant une unité d'exposition équipée de trois sources lumineuses (12, 113, 114, 115) correspondant à trois couleurs primaires, un sensitomètre équipé d'un plateau (8) portant un substrat revêtu de l'émulsion photographique, d'un masque (11) pour masquer cette émulsion et d'un mécanisme (46, 49) pour déplacer le masque relativement à cette émulsion, et une unité centrale de commande (14) équipée d'un clavier de sélection (15) des références du nuancier, d'organes de calcul de la durée de chacune des expositions à une des trois sources lumineuses, d'organes de commande de l'unité d'exposition et d'organes de commande du mécanisme de déplacement du masque, caractérisé en ce que le plateau du sensitomètre est rotatif et comporte un dispositif de succion (41) pour maintenir le substrat revêtu de l'émulsion photographique sur ce plateau, en ce que le masque (11) comporte un cache (23) mobile selon une direction, pourvu d'une fenêtre d'exposition (25) allongée, sensiblement perpendiculaire à cette direction, et dont la longueur est telle qu'au cours du déplacement du cache, la fenêtre puisse balayer entièrement l'émulsion photographique, et un obturateur (24) mobile selon une direction parallèle à la direction de déplacement du cache, susceptible d'obturer la fenêtre d'exposition, et en ce que l'unité d'exposition comporte une boîte à filtres (13) comportant trois filtres correspondant aux trois couleurs primaires, ces trois filtres étant mobiles en translation, et un mécanisme (122, 118, 117) susceptible de les interposer successivement entre la source lumineuse et la fenêtre d'exposition du masque.

2. Appareil selon la revendication 1, caractérisé en ce que le plateau (8) du sensitomètre comporte une plaque circulaire rotative (18) dont la surface supérieure comprend un réseau de gorges superficielles (19), reliées chacune à au moins un canal (20) traversant cette plaque et connecté à un bloc de succion (41) relié à une pompe à vide.

3. Appareil selon la revendication 2, caractérisé en ce que les gorges superficielles ont chacune la forme d'un cadre rectangulaire, ces cadres étant disposés l'un dans l'autre de sorte que leurs côtés soient parallèles et ayant des dimensions légèrement inférieures au format standard des substrats portant une émulsion photographique, en ce que chacun de ces cadres correspond à un canal traversant la plaque, en ce que chacun de ces canaux est relié à un conduit intérieur (21) du bloc de succion, et en ce que chacun de ces conduits intérieurs est relié indépendamment à la pompe à vide par l'intermédiaire d'une vanne (59).

4. Appareil selon la revendication 1, caractérisé en ce qu'il comporte deux volets (26, 27) disposés de part et d'autre du masque, ces volets étant agencés pour recouvrir les parties du plateau du sensitomètre non obturées par le masque, quelle que soit la position de ce dernier.

5. Appareil selon la revendication 4, caractérisé en ce que les volets (26, 27) comportent chacun un mandrin enrouleur (26', 27'), ces mandrins étant respectivement logés dans les montants latéraux du châssis du sensitomètre, et en ce que leurs extrémités libres sont fixées aux bords latéraux du cache (23) du masque du sensitomètre.

6. Appareil selon la revendication 1, caractérisé en ce que le cache (23) du masque du sensitomètre est solidaire d'un chariot (42) mobile selon une direction perpendiculaire à la fenêtre du masque, et en ce que l'obturateur (24) de ce masque est solidaire d'un coulisseau (47) mobile selon une direction parallèle à la précédente.

7. Appareil selon la revendication 6, caractérisé en ce que le cache (23) est solidaire d'un support (62) lié au chariot mobile par au moins une charnière (80).

8. Appareil selon les revendications 6 et 7, caractérisé en ce que l'obturateur (24) est solidaire d'un support (67) lié au coulisseau mobile par au moins une charnière (80) coaxiale à celle du support du cache.

9. Appareil selon la revendication 6, caractérisé en ce que le coulisseau (47) et le chariot (42) mobiles sont montés de telle manière qu'ils puissent se déplacer en translation le long de deux tiges de guidage (43, 44) parallèles entre elles.

10. Appareil selon les revendications 6 et 9, caractérisé en ce que le chariot est déplacé en translation au moyen d'un moteur (46) porté par le châssis du sensitomètre et couplé à une vis rotative (45) parallèle aux tiges de guidage.

11. Appareil selon les revendications 6 et 9, caractérisé en ce que le coulisseau (47) est déplacé en translation au moyen d'un moteur (49) porté par le chariot et couplé à une vis rotative (48) parallèle aux tiges de guidage.

12. Appareil selon la revendication 6, caractérisé en ce que le chariot (42) comporte au moins quatre éléments d'appui (73) contre les tiges de guidage (43, 44), chacun de ces éléments comportant quatre galets rotatifs (74) disposés à 90° l'un par rapport à ses deux voisins, de telle manière qu'ils ont chacun un seul point de contact avec la tige de guidage (43, 44) correspondante.

13. Appareil selon la revendication 12, caractérisé en ce que les éléments d'appui (73) comportént chacun un tronçon (75) de profil tubulaire à section carrée, en ce que chaque galet (74) est porté par un support en U fixé sur un des côtés intérieurs du profil tubulaire, et en ce que deux des supports de galets adjacents sont montés rigidement sur les côtés du profil tubulaire, alors que les deux autres sont montés sur un ressort (76) agissant en compression.

14. Appareil selon la revendication 1, caractérisé en ce que le cache (23) et l'obturateur (24) comportent chacun au moins un galet d'appui (65) monté à leur extrémité libre.

15. Appareil selon les revendications 1 et 2, caractérisé en ce que la plaque circulaire rotative (18) du sensitomètre est associée à une plaque support (22) reliée à une roue d'entraînement (55) dont l'axe (86) est logé dans un alésage central (87) du bloc de succion (41).

16. Appareil selon la revendication 15, caractérisé en ce que l'axe (86) de la roue d'entraînement comporte une série de nervures (91) délimitant des cavités annulaires (94), dont chacune communique d'une part avec une gorge superficielle (19) de la plaque circulaire (18) et, d'autre part, par l'intermédiaire d'une vanne de sélection (59), avec la pompe à vide.

17. Appareil selon la revendication 1, caractérisé en ce que la boîte à filtres (13) comporte un obturateur (100) à volets, trois filtres (113, 114, 115) mobiles en translation et un mécanisme à cames pour engendrer le déplacement translatoire sélectif des filtres devant une ouverture ménagée dans la boîte.

**Claims**

1. An apparatus for reproducing at least one coloured surface on a photographic emulsion, whose colour corresponds to a reference selected on a colour chart, said surface being obtained by controlled colour synthesis on a given photographic emulsion, the apparatus comprising an exposure unit equipped with three light sources (12, 113, 114, 115) corresponding to three primary colours, a sensitometer equipped with a tray (8) carrying a substrate coated with the photographic emulsion, with a mask (11) for masking this emulsion and with a mechanism (46, 49) for displacing the mask relatively to this emulsion, a central control unit (14) equipped with a keyboard (15) for selecting the references of the colour chart, with means for calculating the duration of each exposure to one of the three light sources, with means for controlling the exposure unit and with means for controlling the mechanism for displacement of the mask, characterized in that the sensitometer tray is rotatable and comprises a suction device (41) for maintaining the substrate coated with the photographic emulsion on this tray, in that the mask (11) comprises a screen (23) which is movable in one direction, is provided with an elongated exposure window, substantially perpendicular to this direction, and whose length is such that the window may entirely scan the photographic emulsion during displacement of the screen, and a shutter (24) which is movable in a direction parallel to the direction of displacement of the screen and is capable of occluding the exposure window, and in that the exposure unit comprises a filter box (13) comprising three filters corresponding to said three primary colours, these three filters being movable in translation and associated with a mechanism (122, 118, 117) allowing their displacement so that these filters may be successively inserted between the light source and the exposure window of the mask.

2. Apparatus according to claim 1 characterized in that the sensitometer tray (8) comprises a circular rotatable plate (18) whose top surface comprises a network of shallow grooves (19), each connected to at least one channel (20) which traverses this plate and is connected to a suction block (41) arranged for connection to a vacuum pump.

3. Apparatus according to claim 2 characterized in that the shallow grooves are arranged in the form of a network of rectangular frames disposed within one another with their respective sides being disposed parallel to one another and having dimensions slightly smaller than the standard format of the substrates carrying a photographic emulsion, in that each of said frames communicates with a corresponding channel traversing said plate, in that each said channel is connected to a corresponding conduit (21) within said suction block, and in that said inner conduit is associated with a valve whereby it may be independently connected to the vacuum pump (59).

4. Apparatus according to claim 1 characterized in that the two sliding diaphragms (26, 27) are arranged on either side of said mask or as to cover those parts of the sensitometer tray which are not occluded by the mask in every position of said mask.

5. Appartus according to claim 4 characterized in that each sliding diaphragms (26, 27) comprises a winding spindle (26', 27') accomodated respectively in one of the lateral member of a frame of the sensitometer, and in that the diaphragms have free ends fixed to the lateral edges of the screen (23) of the sensitometer mask.

6. Apparatus according to claim 1 characterized in that the screen (23) of the sensitometer mask is integral with a slide (42) which is movable in a direction perpendicular to the window of the mask and in that the shutter of said mask is integral with a guide block which is movable in a direction parallel to said direction of movement of said slide.

7. Apparatus according to claim 6 characterized in that the screen (23) is integral with a support (62) connected to said movable guide block by means of at least one hinge (80).

8. Apparatus according to claims 6 and 7 characterized in that the shutter (24) is integral with a support (67) connected to said movable guide block by means of at least one hinge (80) which is coaxial with that of the support of the screen.

9. Apparatus according to claim 6 characterized in that the movable guide block (47) and the movable slide (42) are mounted in such a manner that they can be displaced along two guide rods (43, 44) which are parallel to each other.

10. Apparatus according to claims 6 and 9 characterized in that the slide is arranged for displacement by means of a motor (46) carried by the frame of the sensitometer and coupled with a rotating screw (45) parallel to the guide rods.

11. Apparatus according to claims 6 and 9 characterized in that the guide block (47) is arranged for displacement by means of a motor (49) carried by the slide and coupled with a rotating screw (48) parallel to the guide rods.

12. Apparatus according to claim 6 characterized in that the slide (42) comprises at least four bearing elements (73) respectively associated with said guide rods (43, 44), each bearing element comprising four rollers (74) each disposed for rotation at 90° with respect to two neighbouring rollers, so that each of said four rollers has a single point of contact with a corresponding guide rod (43, 44).

13. Apparatus according to claim 12 characterized in that the bearing element (73) each comprise a tubular section (75) having a square cross-section, in that each roller (74) is carried by a U-shaped support fixed on one of the inner sides of the tubular section, and in that two supports of adjacent rollers are rigidly mounted on the sides of the tubular section, while the supports of the two other rollers are mounted on a compression spring (76).

14. Apparatus according to claim 1 characterized in that the screen (23) and the shutter (24) each comprise at least one support roller (65) mounted at the free end thereof.

15. The apparatus according to claims 1 and 2 characterized in that the circular rotatable sensitometer plate (18) is associated with a support plate (22) connected to a drive wheel (55) having an axle (86) seated in a central bore (87) of said suction block (41).

16. Apparatus according to claim 15 characterized in that the drive wheel has an axle (86) comprising a series of ribs (91) defining annular cavities (94) each communicating on one hand with a shallow groove (19) of said circular plate (18) and on the other hand with a selecting valve (59) for connection to the vacuum pump.

17. Apparatus according to claim 1 characterized in that the filter box (13) comprises a shutter (10) with sliding diaphragms, three movable filters (113, 114, 115) and a cam mechanism for providing selective displacement of the filters in front of an opening provided in said box.

**Patentansprüche**

1. Apparat zum Reproduzieren von mindestens einer farbigen Fläche auf einer fotografischen Emulsion, deren Farbe einem über ein Farbschattierungsmuster ausgewählten Muster entspricht, wobei man diese Fläche durch kontrollierten Farbaufbau auf einer gegebenen fotografischen Emulsion erhält, bestehend aus einem mit drei den drei Grundfarben entsprechenden Lichtquellen (12, 113, 114, 115) ausgestatteten Belichtungsgerät, einem Empfindlichkeitsmesser, der erstens mit einem Auflagetisch (8) ausgestattet ist, der eine mit der fotografischen Emulsion beschichtete Unterlage trägt, zweitens mit einer Abdeckung (11), um diese Emulsion abzudecken und drittens mit einem Mechanismus (46, 49), um die Abdeckung relativ zu dieser Emulsion zu verschieben und aus einer zentralen Steuereinheit (14), ausgestattet mit einer Tastatur (15) für die Auswahl der Muster aus dem Farbschattierungsmuster, mit Einrichtungen zur Berechnung der Dauer jeder Belichtung mit einer der drei Lichtquellen, mit Bedienungseinrichtungen für das Belichtungsgerät und mit Bedienungseinrichtungen für den Mechanismus zur Verschiebung der Abdeckung, dadurch gekennzeichnet, daß der Auflagetisch des Empfindlichkeitsmessers rotierbar ist und eine Saugeinrichtung (41) aufweist, um das mit einer fotografischen Emulsion beschichtete Unterlagematerial (Substrat) auf diesem Auflagetisch festzuhalten und daß die Abdeckung (11) eine in einer Richtung bewegliche Maske (23) aufweist, die mit einem länglichen Belichtungsfenster (25) versehen ist, welches genau senkrecht zu dieser Richtung liegt und dessen Länge derart ist, daß das Fenster im Laufe der Bewegung der Maske die fotografische Emulsion vollkommen überstreichen kann, sowie einen Verschluß (24), der in einer zur Verschiebungsrichtung der Maske parallelen Richtung beweglich und in der Lage ist, das Belichtungsfenster zu verschließen, und daß das Belichtungsgerät eine Filterkassette (13) mit drei, den drei Grundfarben entsprechenden Filtern enthält, wobei diese drei Filter verschiebbar sind und einen Mechanismus (122, 118, 117), der in der Lage ist, sie nacheinander zwischen die Lichtquelle und das Belichtungsfenster der Abdeckung zu schieben.

2. Apparat nach Anspruch 1, dadurch gekennzeichnet, daß der Auflagetisch (8) des Empfindlichkeitsmessers eine drehbare Kreisscheibe (18) beinhaltet, deren Oberfläche ein Raster von flachen Rillen (19) aufweist, wovon jede mit mindestens einem diese Scheibe durchdringenden und an einen Saugkopf (41) angeschlossenen Kanal (20) verbunden ist, wobei der Saugkopf (41) mit einer Vakuumpumpe in Verbindung steht.

3. Apparat nach Anspruch 2, dadurch gekennzeichnet, daß die flachen Rillen jeweils die Form eines rechteckigen Rahmens besitzen, wobei die Rahmen so ineinander angeordnet sind, daß ihre Seiten parallel sind, wobei ihre Abmessungen etwas kleiner sind als die Standardformate des eine fotografische Emulsion tragenden Unterlagematerials, weiterhin daß jeder der Rahmen mit einem die Platte durchdringenden Kanal verbunden ist, daß jeder dieser Kanäle an eine innere Leitung (21) des Saugkopfes angeschlossen ist, und daß jede der inneren Leitungen mittels eines Ventils (59) unabhängig an die Vakuumpumpe angeschlossen ist.

4. Apparat nach Anspruch 1, dadurch gekennzeichnet, daß er zwei zu beiden Seiten der Abdeckung angeordnete Rolljalousien (26, 27) aufweist, wobei die Jalousien dazu dienen, die nicht von der Abdeckung verdeckten Teile des Auflagetisches des Empfindlichkeitsmessers unabhängig von der Lage der Abdeckung zu überziehen.

5. Apparat nach Anspruch 4, dadurch gekennzeichnet, daß jede der Rolljalousien (26, 27) eine Aufwickeleinrichtung (26', 27') aufweist, wobei die Aufwickeleinrichtungen jeweils in den seitlichen Gestellstützen des Empfindlichkeitsmessers untergebracht sind und daß ihre freien Enden an den seitlichen Maskenrändern (23) der Abdeckung des Empfindlichkeitsmessers befestigt sind.

6. Apparat nach Anspruch 1, dadurch gekennzeichnet, daß die Maske (23) der Abdeckung des Empfindlichkeitsmessers fest mit einem Support (42) verbunden ist, der in einer zum Fenster der Abdeckung senkrechten Richtung beweglich ist und daß der Verschluß (24) dieser Abdeckung fest mit einem Schlitten (47) verbunden ist, der parallel zur obigen Richtung bewegbar ist.

7. Apparat nach Anspruch 6, dadurch gekennzeichnet, daß die Maske (23) fest mit einem Träger (62) verbunden ist, der an dem beweglichen Support über mindestens ein Scharnier (80) angelenkt ist.

8. Apparat nach den Ansprüchen 6 und 7, dadurch gekennzeichnet, daß der Verschluß (24) fest mit einem Träger (67) verbunden ist, der an dem beweglichen Schlitten über mindestens ein Scharnier (80) angelenkt ist, welches koaxial zu demjenigen des Maskenträgers liegt.

9. Apparat nach Anspruch 6, dadurch gekennzeichnet, daß der bewegliche Schlitten (47) und der bewegliche Support (42) so montiert sind, daß sie sich in Parallelverschiebung entlang von zwei zueinander parallelen Führungsstangen (43, 44) verschieben können.

10. Apparat nach den Ansprüchen 6 und 9, dadurch gekennzeichnet, daß der Support mit Hilfe eines am Gestell des Empfindlichkeitsmessers montierten Motors (46) in Parallelbewegung verschiebbar ist, wobei letzterer mit einer zu den Führungsstangen parallelen, drehbaren Schraubenspindel (45) gekuppelt ist.

11. Apparat nach Anspruch 6 und 9, dadurch gekennzeichnet, daß der Schlitten (47) mit Hilfe eines vom Support getragenen Motors (49) in Parallelbewegung verschiebbar ist, wobei der Motor mit einer zu den Führungsstangen parallelen, drehbaren Schraubenspindel (48) gekuppelt ist.

12. Apparat nach Anspruch 6, dadurch gekennzeichnet, daß der Support (42) mindestens vier sich auf die Führungsstangen (43, 44) abstützende Elemente (73) aufweist, wobei jedes der Elemente vier drehbare Laufrollen (74) umfaßt, wovon jede zu den beiden benachbarten um 90 Grad versetzt ist, derart, daß jede Rolle einen einzigen Kontaktpunkt mit der entsprechenden Führungsstange (43, 44) besitzt.

13. Apparat nach Anspruch 12, dadurch gekennzeichnet, daß jedes der Abstützelemente (73) ein Stück (75) eines Profilrohres von quadratischem Querschnitt aufweist, daß jede Rolle (74) von einem U-förmigen auf einer der Innenseiten des Rohrprofils befestigten Halter getragen ist und daß zwei benachbarte Rollenhalter starr auf den Seitenflächen des Rohrprofils montiert sind, während die zwei anderen über eine unter Druck stehende Feder (76) montiert sind.

14. Apparat nach Anspruch 1, dadurch gekennzeichnet, daß sowohl die Maske (23) als auch der Verschluß (24) mindestens eine an ihrem freien Ende montierte Abstützrolle (65) aufweisen.

15. Apparat nach den Ansprüchen 1 und 2, dadurch gekennzeichnet, daß die drehbare Kreisscheibe (18) des Empfindlichkeitsmessers mit einer Auflageplatte (22) und diese wieder mit einem Antriebsrad (55) verbunden ist, deren Achse (86) in einer zentralen Bohrung (87) des Saugkopfes (41) liegt.

16. Apparat nach Anspruch 15, dadurch gekennzeichnet, daß die Achse (86) des Antriebsrades eine Reihe von Bunden (91) aufweist, welche ringförmige Vertiefungen (94) begrenzen, wovon jede einerseits mit einer flachen Rille (19) der Kreisscheibe (18) und andererseits mittels eines Wählventils (59) mit der Vakuumpumpe in Verbindung steht.

17. Apparat nach Anspruch 1, dadurch gekennzeichnet, daß die Filterkassette (13) einen Schieberverschluß (100), drei parallel bewegliche Filter (113, 114, 115) und einen Nockenmechanismus aufweist, um die selektive Parallelverschiebung der Filter vor einer in der Kassette angeordneten Öffnung zu bewerkstelligen.

FIG. 1

FIG. 6

FIG. 2

FIG. 3

FIG. 4

**FIG. 5**

**FIG. 7**